# FASCICULE DE BREVET EUROPEEN

(11) **EP 1 083 808 B1**
(45) Date de publication et mention de la délivrance du brevet: **10.04.2002**
(21) Numéro de dépôt: 99923713.4
(22) Date de dépôt: 10.06.1999
(51) Int. Cl.: A47C 1/121, A47C 7/56, A47C 9/02

(54) **SIEGE DU TYPE A MISERICORDE**
STEHSITZ
MISERICORD TYPE SEAT

(30) Priorité: 11.06.1998 FR 9807336
(43) Date de publication de la demande: 21.03.2001
(73) Titulaire: R & D Industries, Société à Responsabilité Limitee, 78490 Les Mesnuls (FR); CGEA Transport (Societe Anonyme), 92000 Nanterre (FR)
(72) Inventeur: CHENE, Richard, F-92200 Neuilly sur Seine (FR); DELAMOUR, Dominique, F-78490 Les Mesnuls (FR); RODI, Olivier, F-78650 Saulx-Marchais (FR)
(74) Mandataire: Sauvage, Renée
(86) Numéro de dépôt international: FR9901373
(87) Numéro de publication internationale: WO9963867

(56) Documents cités:
- FR-A- 2 718 620
- FR-A- 2 733 674
- US-A- 3 762 764

## Description

La présente invention concerne un siège du type à miséricorde.

En architecture, on désigne par "miséricorde" une sorte de cul-de-lampe solidaire du dessous du siège relevable d'une stalle d'église et offrant aux moines, lorsque le siège est relevé, un mini-siège de substitution sur lequel ils peuvent s'appuyer tout en paraissant être debouts.

Plus généralement, dans la description suivante et les revendications annexées, on entend par "siège du type à miséricorde" un siège comportant une assise relevable et des moyens permettant à un utilisateur, une fois l'assise relevée, d'occuper confortablement une position assis-debout ou debout-assis en appui sur lesdits moyens.

Les sièges de ce type sont particulièrement bien adaptés à l'équipement des lieux connaissant une fréquentation très variable, tels que les transports en commun. En effet, si, comme les strapontins classiques, ils permettent à un utilisateur de s'asseoir normalement en l'absence d'affluence et, dans le cas contraire, d'augmenter l'espace disponible pour des voyageurs debout, ces sièges ont en outre l'avantage d'offrir à l'utilisateur un appui stable en position debout.

Par exemple, FR-A-2 733 674 divulgue un siège comprenant une assise relevable dont le bord antérieur est susceptible de venir en prise, une fois l'assise relevée, avec un crochet solidaire d'un plateau monté pivotant sur le bord supérieur du dossier du siège. Le plateau occupe alors une position inclinée dans laquelle il offre un appui à un utilisateur qui peut ainsi s'asseoir tout en restant presque debout.

Les sièges du type à miséricorde ont en outre connu un regain d'intérêt avec le développement de l'ergonomie.

Ainsi, FR-A-2 473 864 divulgue un siège pouvant servir à la fois de chaise de travail et de siège de travail debout pour des personnes dont la fonction impose de passer fréquemment de la position assise à la position debout, et vice-versa. Ce siège connu comporte un piètement sur lequel est montée une assise réglable en hauteur et en inclinaison et qui est articulée à un dossier susceptible d'être rabattu sur la partie postérieure de l'assise pour offrir un appui de bassin à un utilisateur debout, l'assise se trouvant en position basculée.

Il reste toutefois un besoin en un siège du type à miséricorde qui soit à la fois peu encombrant, de construction simple, et qui puisse passer automatiquement d'une position dans laquelle il offre une assise normale à un utilisateur à une position dans laquelle il lui offre un appui fessier stable, sans nécessiter d'intervention manuelle de l'utilisateur sur quelque partie du siège que ce soit.

Le siège selon l'invention répond à ce besoin en ce sens qu'il comporte une pièce de soutien articulée à l'extrémité antérieure d'une assise relevable, autour d'un axe sensiblement parallèle à ladite extrémité, ladite pièce de soutien étant mobile, tandis que ladite assise se trouve à l'état rabattu contre un support, entre une position de repos et une position active dans laquelle elle est susceptible d'offrir un appui fessier à un utilisateur, et en ce qu'il intègre en outre des moyens de verrouillage de ladite pièce de soutien en position active, lesquels moyens de verrouillage sont susceptibles d'être activés automatiquement par des moyens d'activation tandis que l'utilisateur s'appuie sur ladite pièce de soutien.

Dans une forme d'exécution préférée de l'invention, les moyens de verrouillage comprennent au moins un arbre commandé par au moins une transmission Bowden, formant moyen d'activation, pour se projeter depuis une face de ladite pièce de soutien et jusque dans un trou ménagé dans une paroi fixe située en vis-à-vis de ladite face. L'extrémité dudit arbre peut avoir toute forme convenable facilitant sa venue en prise avec un trou apparié, telle qu'une forme conique ou pyramidale, par exemple, ou encore une forme analogue à un pêne.

Selon une autre forme d'exécution de l'invention, les moyens de verrouillage comprennent au moins un électro-aimant et les moyens d'activation sont constitués d'un signal électrique issu, par exemple, d'un moyen de détection. Le moyen de détection peut lui-même être formé d'au moins une cellule photoélectrique détectant la présence de l'utilisateur sur la pièce de soutien du siège selon l'invention, ou d'un moyen de détection du titre de transport de l'utilisateur, par exemple.

Avantageusement, le siège selon l'invention comprend en outre des moyens élastiques, tels qu'un ressort de rappel, pour ramener et maintenir ladite pièce de soutien en position de repos et autoriser ainsi à nouveau un usage normal de l'assise après qu'un utilisateur assis-debout se soit relevé.

L'angle de rotation de la pièce de soutien selon l'invention peut être ajusté, de même que la hauteur à laquelle le siège est monté sur son support, de manière à ce que le siège selon l'invention puisse aussi bien offrir un appui aux utilisateurs de grande taille qui seront assis-debout qu'aux utilisateurs de plus petite taille qui seront debout-assis. Par exemple, la pièce de soutien selon l'invention pourra être mobile sur un angle de 1 à 30°.

Avantageusement, le siège selon l'invention peut en outre comprendre un appui lombaire coulissant entre une position dans laquelle, l'assise étant abaissée, il offre un soutien lombaire à l'utilisateur assis et une position dans laquelle, l'assise étant relevée, ledit appui lombaire est escamoté entre ladite assise et le support contre lequel elle est rabattue. Un tel appui lombaire coulissant permet au siège de satisfaire à une double exigence : il offre un confort appréciable à l'utilisateur assis, tout en réduisant l'encombrement du siège replié et en augmentant ainsi la capacité d'accueil du lieu équipé de tels sièges.

Le confort de l'utilisateur peut être encore amélioré, selon l'invention, par la prévision d'un appui scapulaire offrant à l'utilisateur un soutien scapulaire tandis que l'assise est abaissée et un soutien lombaire en position assis-debout ou debout-assis.

Le siège selon l'invention est destiné à l'aménagement des salles de spectacles, des stades et terrains de sport, des véhicules de transport terrestre, maritime et aérien, sans que ces applications soient limitatives.

L'invention sera mieux comprise, et ses avantages ressortiront mieux, à la lumière de la description détaillée suivante d'un mode de réalisation non limitatif, prise en combinaison avec les dessins annexés dans lesquels :
la figure 1 est une vue en perspective d'un siège selon l'invention en position abaissée de l'assise ;
la figure 2A est une vue en perspective du siège de la figure 1 alors que l'assise est relevée et que la pièce de soutien est en position de repos ;
la figure 2B est une vue en coupe transversale selon la ligne II-II du siège illustré à la figure 2A ;
la figure 3A est une vue en perspective du siège de la figure 2, la pièce de soutien étant en position active ;
la figure 3B est une vue en coupe transversale selon la ligne III-III du siège illustré à la figure 3A ;
la figure 4A est une vue schématique en perspective des moyens de verrouillage utilisables dans la présente invention, à l'état activé ; et
la figure 4B est une vue similaire à la figure 4A, sur laquelle les moyens de verrouillage sont désactivés.

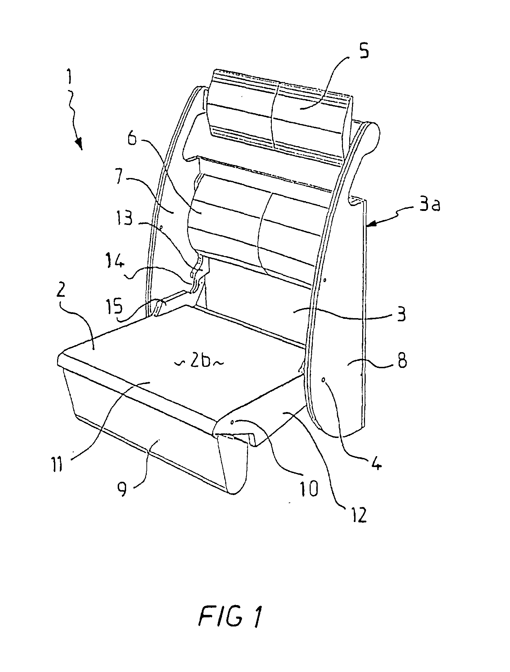

Si l'on se réfère tout d'abord à la figure 1, on voit un siège 1 selon la présente invention comprenant, d'une manière générale, une assise relevable 2 et un dossier 3.

Dans la configuration illustrée, l'assise du siège a été abaissée par un utilisateur (non représenté) assis sur le siège 1.

Le dossier 3 est destiné à être monté, par sa surface arrière 3a, sur une paroi telle qu'un mur ou une autre paroi verticale équipant un stade, une salle de spectacles ou un véhicule de transport en commun, par exemple.

L'assise 2 est montée pivotante, autour d'un axe 4, sur deux flasques 7, 8 qui s'étendent perpendiculairement au dossier 3 et au sol (non représenté). Comme on le voit sur la figure 1, l'assise 2 présente une surface supérieure plane 2b depuis laquelle se projettent perpendiculairement, vers le sol, deux ailes 12 (dont une seule est visible sur cette figure).

Le siège selon l'invention comporte en outre une pièce de soutien 9 qui, dans cette forme d'exécution, est montée pivotante, autour d'un axe 10, sur les ailes 12, au niveau de l'extrémité antérieure 11 de l'assise 2.

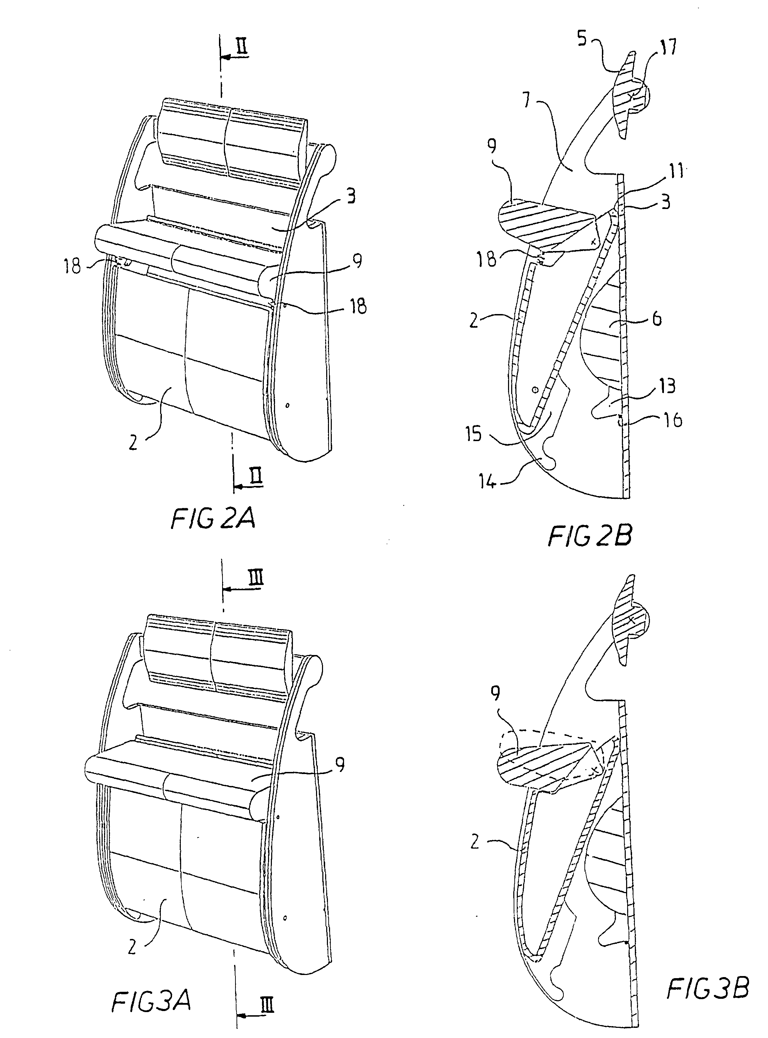

Le dossier 3 est équipé d'un appui scapulaire 5, articulé autour d'un axe 17 sur les flasques 7, 8 (figure 2B), ainsi que d'un appui lombaire 6, respectivement destinés à offrir un soutien aux épaules d'un utilisateur assis et à suivre la courbure (lordose modérée) de sa colonne vertébrale, de manière à permettre à l'utilisateur de prendre une position confortable et d'éviter toute douleur dorsale inévitablement liée à la station assise prolongée dans une posture défavorable du point de vue anatomique.

Dans la position représentée du siège selon l'invention, l'appui lombaire 6 est maintenu en position par la venue en butée d'un pied 13, solidaire de chacune de ses extrémités latérales, avec une crosse 14 dont la partie longitudinale 15 est fixée à la partie latérale postérieure de la surface d'assise 2b, en vis-à-vis du pied 13.

Dès que l'utilisateur se relève, par exemple pour laisser de la place aux passagers affluant dans un véhicule de transport en commun ou pour laisser passer des spectateurs dans une salle de spectacles ou un stade, dans lesquels une rangée de sièges selon l'invention peut être prévue, un mécanisme de rappel (non représenté) ramène l'assise 2 dans la position illustrée sur les figures 2A et 2B. Il s'agit d'une caractéristique bien connue des sièges de type strapontins, de sorte que ce mécanisme de rappel ne sera pas décrit ici et pourra comprendre tout moyen, connu de l'homme du métier, utilisé à cette fin.

Lors du basculement de l'assise 2, les pieds, tels que 13, et les crosses, telles que 14, ont été mis hors de prise, de sorte que l'appui lombaire 6 a coulissé, sous l'effet de la gravité, depuis la position ilustrée sur la figure 1, jusqu'à venir en butée contre une butée 16, comme illustré à la figure 2B. L'assise 2 a ainsi pu être basculée entièrement, jusqu'à ce que son extrémité antérieure 11 vienne en butée contre le dossier 3.

Dans la configuration du siège représentée sur les figures 2A et 2B, deux ressorts de compression 18 maintiennent la pièce de soutien 9 en position de repos, dans laquelle un utilisateur peut soit abaisser à nouveau l'assise, soit prendre appui sur la pièce de soutien 9. Dans le cas où la station debout forcée se prolonge, l'utilisateur aura naturellement tendance à prendre appui sur la pièce de soutien 9, de la même manière qu'il s'appuie actuellement sur le bord des strapontins classiques, les détournant ainsi de leur fonction première. Toutefois, contrairement aux strapontins classiques, le siège selon l'invention garantit alors à l'utilisateur que l'assise ne s'abaissera pas intempestivement sous l'effet du poids exercé sur celle-ci.

En effet, tandis que l'utilisateur prend appui sur la pièce de soutien 9, la force exercée sur la pièce 9 est supérieure à la force des ressorts de compression 18, de sorte que la pièce de soutien 9 pivote, depuis la position illustrée sur les figures 2A et 2B ou en pointillés sur la figure 3B, jusqu'en position active, illustrée sur la figure 3A et en trait plein sur la figure 3B. Dans cette position active, des moyens de verrouillage de la pièce 9 et, partant, de l'assise 2 en position relevée, sont activés.

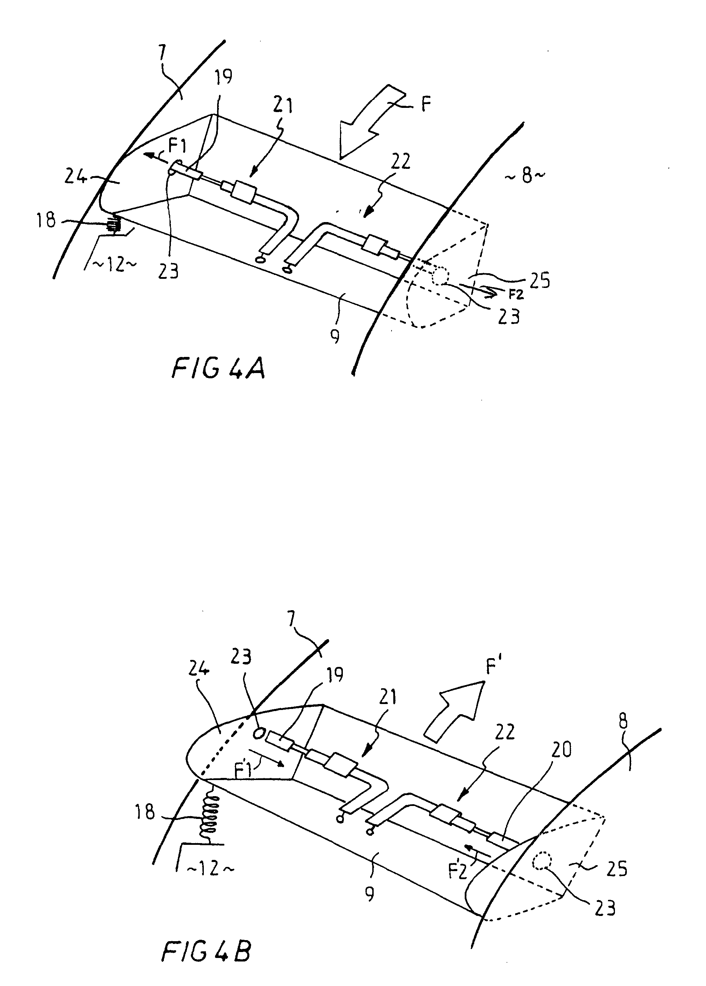

Des moyens de verrouillage convenant à cette fin sont illustrés sur les figures 4A et 4B.

Dans la forme d'exécution illustrée, ces moyens de verrouillage sont constitués d'une paire d'arbres 19, 20 connectés à des transmissions Bowden 21, 22 intégrées à la pièce de soutien 9. Les arbres 19, 20 sont susceptibles de se projeter depuis les faces latérales 24, 25 de la pièce de soutien 9 pour venir en prise avec des trous appariés, tels que 23, ménagés dans les flasques 7,8 (figure 1).

Précisément, le fonctionnement des moyens de verrouillage est le suivant.

Tandis que l'utilisateur exerce une pression sur la pièce de soutien 9, et donc également sur les ressorts de compression 18, dans la direction de la flèche F illustrée à la figure 4A, la compression des transmissions Bowden résulte en un déplacement des arbres 19, 20 selon les flèches F₁, F₂ et jusque dans les trous 23, immobilisant ainsi la pièce d'appui 9 en position active et permettant ainsi à l'utilisateur d'occuper une position debout-assis stable.

Dès que l'utilisateur se relève, les transmissions Bowden n'étant plus soumises à aucune force de compression, les arbres 19, 20 sont libérés des trous 23, comme indiqué par les flèches F'₁, F'₂. La force de rappel exercée par les ressorts 18 fait alors pivoter la pièce de soutien 9 dans la direction indiquée par la flèche F' à la figure 4B, ramenant ainsi la pièce 9 en position de repos, comme illustré sur les figures 2A et 2B.

Le siège peut ensuite être à nouveau utilisé soit comme illustré à la figure 1, soit comme illustré sur les figures 3A et 3B.

## Revendications

1. Siège du type à miséricorde, **caractérisé en ce qu'**il comporte une pièce de soutien (9) articulée à l'extrémité antérieure (11) d'une assise relevable (2), autour d'un axe (10) sensiblement parallèle à ladite extrémité (11), ladite pièce de soutien (9) étant mobile, tandis que ladite assise (2) se trouve à l'état rabattu contre un support, entre une position de repos et une position active dans laquelle elle est susceptible d'offrir un appui fessier à un utilisateur, et **en ce qu'**il intègre en outre des moyens de verrouillage (19, 20, 23) de ladite pièce de soutien en position active, lesquels moyens de verrouillage (19, 20, 23) sont susceptibles d'être activés automatiquement par des moyens d'activation (21, 22) tandis que l'utilisateur s'appuie sur ladite pièce de soutien (9).

2. Siège selon la revendication 1, **caractérisé en ce que** lesdits moyens de verrouillage (19, 20, 23) comprennent au moins un arbre (19, 20) commandé par au moins une transmission Bowden (21, 22), formant moyen d'activation, pour se projeter depuis une face (24) de ladite pièce de soutien (9) et jusque dans un trou (23) ménagé dans une paroi fixe (7, 8) située en vis-à-vis de ladite face (24).

3. Siège selon la revendication 1, **caractérisé en ce que** lesdits moyens de verrouillage comprennent au moins un électro-aimant et les moyens d'activation sont constitués par un signal électrique.

4. Siège selon la revendication 3, **caractérisé en ce que** ledit signal électrique est issu d'un moyen de détection.

5. Siège selon la revendication 4, **caractérisé en ce que** ledit moyen de détection est formé d'au moins une cellule photoélectrique détectant la présence de l'utilisateur sur la pièce de soutien du siège selon l'invention.

6. Siège selon l'une quelconque des revendications 1 à 5, **caractérisé en ce qu'**il comprend en outre des moyens élastiques, tels qu'un ressort de rappel (18), pour ramener et maintenir ladite pièce de soutien (9) en position de repos.

7. Siège selon l'une quelconque des revendications précédentes, **caractérisé en ce que** ladite pièce de soutien (9) est mobile sur un angle de 1 à 30°.

8. Siège selon l'une quelconque des revendications précédentes, **caractérisé en ce. qu'**il comprend en outre un appui lombaire (6) coulissant entre une position dans laquelle, l'assise (2) étant abaissée, il offre un soutien lombaire à l'utilisateur assis et une position dans laquelle, l'assise étant relevée, ledit appui lombaire (6) est escamoté entre ladite assise (2) et le support contre lequel elle est rabattue.

9. Siège selon l'une quelconque des revendications précédentes, **caractérisé en ce qu'**il comprend en outre un appui scapulaire (5) offrant à l'utilisateur un soutien scapulaire tandis que l'assise (2) est abaissée et un soutien lombaire tandis que l'assise (2) est relevée.

## Claims

1. A chair of the type having a misericord, **characterized in that** it comprises a support piece (9), articulated to the anterior end (11) of a lift-up seat part (2) that can be lifted up about an axis (10) roughly parallel to said end (11), said support piece (9) being able to move, while said seat part (2) is folded up against a support, between a rest position and an active position in which it can offer a user support for his buttocks, and **in that** it further incorporates means (19, 20, 23) for locking said support piece in the active position, which locking means (19, 20, 23) can be activated automatically by activating means (21, 22) when the user rests against said support piece (9).

2. The chair as claimed in claim 1, **characterized in that** said locking means (19, 20, 23) comprise at least one shaft (19, 20) operated by at least one Bowden transmission (21, 22), forming an activating means to project from a face (24) of said support piece (9) into a hole (23) formed in a fixed wall (7, 8) located opposite said face (24).

3. The chair as claimed in claim 1, **characterized in that** said locking means comprise at least one electromagnet and the activating means consist of an electrical signal.

4. The chair as claimed in claim 3, **characterized in that** said electrical signal comes from a detection means.

5. The chair as claimed in claim 4, **characterized in that** said detection means is formed of at least one photoelectric cell detecting the presence of the user on the support piece of the chair according to the invention.

6. The chair as claimed in any of claims 1 to 5, **characterized in that** it further comprises elastic means, such as a return spring (18), for returning said support piece (9) to the rest position and keeping it there.

7. The chair as claimed in any of the preceding claims, **characterized in that** said support piece (9) can move through an angle of 1 to 30°.

8. The chair as claimed in any of the preceding claims, **characterized in that** it further comprises a lumbar support (6) sliding between a position in which, with the seat part (2) folded down, it offers the seated user lumbar support and a position in which, with the seat part up, said lumbar support (6) is retracted between said seat part (2) and the support against which it is folded.

9. The chair as claimed in any of the preceding claims, **characterized in that** it further comprises a scapular support (5) offering the user scapular support when the seat part (2) is down and lumbar support when the seat (2) is up.

## Patentansprüche

1. Sitz mit Stehstütze, **dadurch gekennzeichnet, dass** er ein Stützteil (9) aufweist, das an einem vorderen Ende (11) eines hochklappbaren Sitzelements (2) um eine zu diesem Ende (11) im wesentlichen parallele Achse (10) angelenkt ist, wobei das Stützteil (9), während das Sitzelement (2) sich in einer gegen einen Halter herangeklappten Stellung befindet, zwischen einer Ruhestellung und einer aktiven Stellung beweglich ist, in der es für einen Benutzer eine Gesäßstütze bilden kann, und dass in ihn Mittel (19, 20, 23) zur Verriegelung des Stützteils in aktiver Stellung integriert sind, die durch Aktivierungsmittel (21, 22) automatisch aktiviert werden können, während der Benutzer sich auf dem Stützteil (9) abstützt.

2. Sitz nach Anspruch 1, **dadurch gekennzeichnet, dass** die Verriegelungsmittel (19, 20, 23) mindestens eine Welle (19, 20) umfassen, die durch mindestens einen ein Aktivierungsmittel bildenden Bowdenzug (21, 22) betätigt wird, um sich von einer Seite (24) des Stützteils (9) bis in ein Loch (23) zu erstrecken, das in einer gegenüber dieser Seite (24) angeordneten feststehenden Wand (7, 8) vorgesehen ist.

3. Sitz nach Anspruch 1, **dadurch gekennzeichnet, dass** die Verriegelungsmittel mindestens einen Elektromagnet umfassen und die Aktivierungsmittel aus einem elektrischen Signal bestehen.

4. Sitz nach Anspruch 3, **dadurch gekennzeichnet, dass** das elektrische Signal von einer Abtasteinrichtung kommt.

5. Sitz nach Anspruch 4, **dadurch gekennzeichnet, dass** die Abtasteinrichtung von mindestens einer Photozelle gebildet ist, die das Vorhandensein eines Benutzers auf dem Stützteil des erfindungsgemäßen Sitzes erfasst.

6. Sitz nach einem der Ansprüche 1 bis 5, **dadurch gekennzeichnet, dass** er außerdem elastische Mittel, wie eine Rückholfeder (18) umfasst, um das Stützteil (9) in die Ruhestellung zurückzubringen und in dieser zu halten.

7. Sitz nach einem der vorhergehenden Ansprüche, **dadurch gekennzeichnet, dass** das Stützteil (9) über einen Winkel von 1 bis 30° beweglich ist.

8. Sitz nach einem der vorhergehenden Ansprüche, **dadurch gekennzeichnet, dass** er außerdem eine Lendenstütze (6) aufweist, die zwischen einer Stellung, in der sie bei heruntergeklapptem Sitzelement (2) dem sitzenden Benutzer eine Lendenstützung bietet, und einer Stellung gleitet, in der die Lendenstütze (6) bei hochgeklapptem Sitzelement (2) zwischen dem Sitzelement (2) und dem Halter, gegen welchen es hochgeklappt ist, weggerückt ist.

9. Sitz nach einem der vorhergehenden Ansprüche, **dadurch gekennzeichnet, dass** er außerdem eine Schulterstütze (5) aufweist, die dem Benutzer eine Schulterstützung biete, während das Sitzelement (2) heruntergeklappt ist, und die dem Benutzer eine Lendenstützung bietet, während das Sitzelement (2) hochgeklappt ist.
